**Europäisches Patentamt**

**European Patent Office**

**Office européen des brevets**

(19)

(11) Veröffentlichungsnummer: **0 057 417**
**B1**

(12)

# EUROPÄISCHE PATENTSCHRIFT

(45) Veröffentlichungstag der Patentschrift:
**22.04.87**

(51) Int. Cl.⁴: **G 01 S 1/14, G 01 S 1/02**

(21) Anmeldenummer: **82100541.0**

(22) Anmeldetag: **27.01.82**

(54) Einrichtung zur Überwachung des Pegels eines Hochfrequenzsignals.

(30) Priorität: **30.01.81 DE 3103118**

(43) Veröffentlichungstag der Anmeldung:
**11.08.82 Patentblatt 82/32**

(45) Bekanntmachung des Hinweises auf die Patenterteilung:
**22.04.87 Patentblatt 87/17**

(84) Benannte Vertragsstaaten:
**DE FR GB IT NL**

(56) Entgegenhaltungen:
**DE - A - 2 161 657**
**DE - A - 2 332 322**
**DE - A - 2 556 201**
**DE - A - 2 613 807**
**DE - B - 1 766 197**
**DE - B - 2 031 045**
**DE - B - 2 247 944**
**DE - B - 2 553 631**

**Elektronik Anzeiger, 6. Jahrgang, 1974, Nr. 11, S. 223-227**

(73) Patentinhaber: **International Standard Electric Corporation, 320 Park Avenue, New York New York 10022 (US)**

(84) Benannte Vertragsstaaten: **FR GB IT NL**

(73) Patentinhaber: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Bloch, Samuel, Taschenbergstrasse 33B, D-7000 Stuttgart 31 (DE)**
Erfinder: **Bressler, Klaus, Paul-Lincke-Weg 10, D-7257 Ditzingen (DE)**
Erfinder: **Idler, Horst, Schneckenbergstrasse 20, D-7000 Stuttgart (DE)**
Erfinder: **Kleiber, Herbert, Georg-Kropp-Strasse 19, D-7140 Ludwigsburg (DE)**

(74) Vertreter: **Graf, Georg Hugo, Dipl.-Ing. et al, c/o Standard Elektrik Lorenz AG Patent- und Lizenzwesen Postfach 300 929 Kurze Strasse 8, D-7000 Stuttgart 30 (DE)**

ACTORUM AG

## Beschreibung

Die Erfindung geht aus von einer Einrichtung zur Überwachung des Pegels eines Hochfrequenzsignals wie im Oberbegriff des Anspruches 1 angegeben. Eine solche Einrichtung ist in dem Artikel «Moderne Funk-Landesysteme» von H. Rausch, Elektronik Anzeiger, 6. Jahrgang, 1974, Nr. 11, Seiten 223 bis 227 beschrieben.

Diese Überwachungseinrichtung ist Bestandteil des dort beschriebenen Überwachungssystems für das Instrumentenlandesystem ILS. Die zu überwachenden Signale haben (z.B. wenn sie von Überwachungsdipolen in 100 m Entfernung von der Sendeanlage aufgenommen werden) z.T. eine so kleine Amplitude, dass sie vor der Auswertung verstärkt werden müssen. Um eine korrekte Überwachung zu ermöglichen, benötigt man einen Verstärker, der über eine lange Zeit hinweg die geforderte Konstanz der Verstärkung einhält und der weitestgehend temperaturunabhängig ist. Solche Verstärker sind technisch aufwendig und störanfällig.

Das Problem, eine konstante Verstärkung zu gewährleisten, ist auch bei anderen Einrichtungen vorhanden. Aus der DE-B-2 553 631 ist eine Schaltungsanordnung zum Nachstellen des Verstärkungsgrades eines die Amplitude eines Signals auswertenden Messempfängers auf seinen Sollwert bekannt. Bei der dort beschriebenen Einrichtung wird einem Stellglied, das einem ZF-Verstärker vorgeschaltet ist, ein ZF-Signal zugeführt. In regelmässigen oder unregelmässigen Abständen wird dem Stellglied anstelle des auszuwertenden ZF-Signals ein ZF-Eichsignal zugeführt. Das in dem Messempfänger auf die gleiche Weise wie das Nutzsignal verarbeitete Eichsignal wird nach dem Durchlaufen einiger Stufen mit einer in dem Messempfänger erzeugten Bezugsspannung verglichen. Abhängig von diesem Vergleich wird das Stellglied so eingestellt, dass das verarbeitete Bezugssignal dieselbe Spannung wie die Bezugsspannung aufweist.

## Aufgabe

Es ist die Aufgabe der Erfindung, eine Einrichtung zur Überwachung des Pegels eines Hochfrequenzsignals anzugeben, bei dem die Pegelüberwachung nicht von Verstärkerschwankungen abhängt.

## Lösung

Die Lösung dieser Aufgabe erfolgt mit den im Anspruch 1 angegebenen Mitteln. Vorteilhafte Weiterbildungen sind den Unteransprüchen zu entnehmen.

## Vorteile

Schwankungen der Verstärkung und Alterungseffekte des in der Überwachungseinrichtung verwendeten Verstärkers werden kompensiert. Ausser dem Pegel des zu überwachenden Signals können auch noch andere Parameter dieses Signals (z.B. eine eventuell vorhandene Modulation) überwacht werden. Es können handelsübliche HF-Verstärkerbausteine verwendet werden.

Wenn ausser dem Signal mit kleinem Pegel auch ein Signal überwacht werden soll, dessen Pegel so gross ist, dass vor der Auswertung nicht verstärkt werden muss, dann kann dieses Signal gemäss einer Weiterbildung zur Bestimmung der Änderung der Verstärkung des Verstärkers verwendet werden.

## Beschreibung

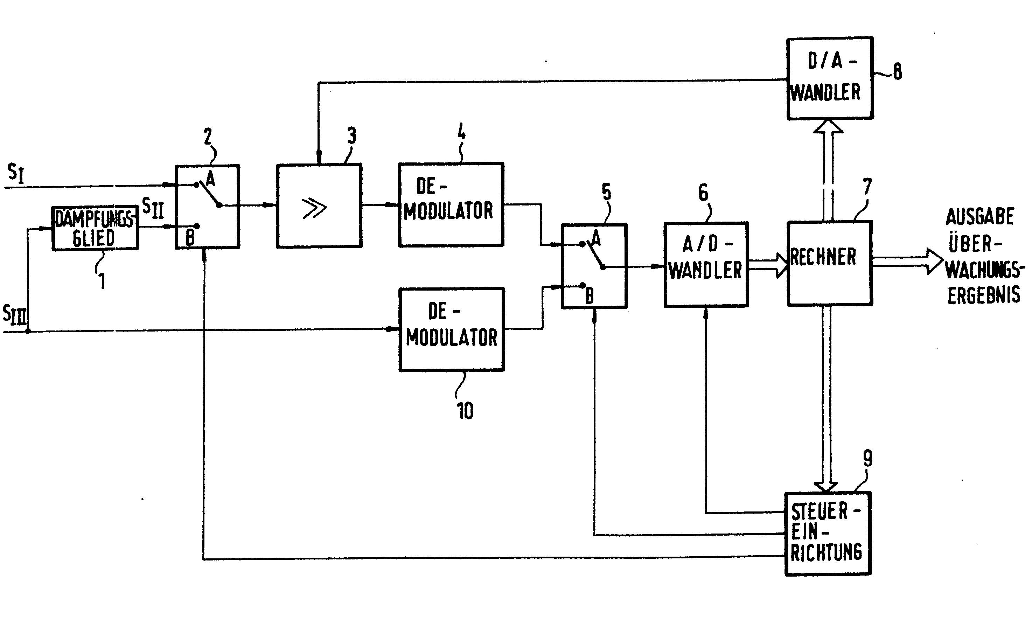

Die Erfindung wird anhand der einzigen Zeichnung, die ein Blockschaltbild der erfindungsgemässen Einrichtung zur Überwachung des Pegels eines Hochfrequenzsignals ist, beispielsweise näher erläutert.

Das zu überwachende Signal $S_I$ wird über eine Schalteinrichtung 2 einem regelbaren Verstärker 3 zugeführt. Das verstärkte Signal wird in einem Demodulator 4 demoduliert und gelangt über eine zweite Schalteinrichtung 5 (PIN-Diodenschalter) und einen Analog/Digital-Wandler 6 zu einem Rechner 7, in dem aus den ihm zugeführten Digitalwerten der Pegel des verstärkten zu überwachenden Signals nach seiner Demodulation ermittelt wird.

Um die Verstärkung des Verstärkers 3 konstant zu halten, wird der Überwachungseinrichtung ein weiteres Signal $S_{III}$ zugeführt, dessen Amplitude so gross ist, dass zur Überwachung keine Verstärkung dieses Signals notwendig ist.

Dieses Signal wird einem weiteren Demodulator 10 zugeführt und, wenn die zweite Schalteinrichtung 5 (PIN-Diodenschalter) ihre andere Schaltstellung einnimmt, dem Analog/Digital-Wandler 6 zugeführt. Der Pegel des demodulierten Signals wird im Rechner 7 ermittelt und gespeichert.

Das weitere Signal $S_{III}$ wird ausserdem einem Dämpfungsglied 1 zugeführt, dessen Betrag der Dämpfung gleich dem Betrag der Verstärkung in dem Verstärker 3 ist. Das gedämpfte Signal $S_{II}$ wird der ersten Schalteinrichtung 2 zugeführt. Wenn diese Schalteinrichtung 2 ihre andere Schaltstellung einnimmt, wird anstelle des zu überwachenden Signals $S_I$ das Signal $S_{II}$ verstärkt und ausgewertet.

Je nach Steuerung der Schalteinrichtungen 2, 5 werden im Empfänger die Pegel der nachfolgend angegebenen Signale ermittelt:

|  | Stellung | Stellung | Stellung |
|---|---|---|---|
| Schalteinrichtung 2 | A | A | B |
| Schalteinrichtung 5 | A | B | A |
| ausgewertetes Signal | $S_I$ | $S_{III}$ | $S_{II}$ |

Eine temperatur- oder altersbedingte Veränderung der Dämpfung des Dämpfungsgliedes 1 kann vernachlässigt werden. Werden für die demodu-

lierten Signale $S_{II}$ und $S_{III}$ im Rechner 7 unterschiedliche Pegel ermittelt, dann wird dies von einer Verstärkungsschwankung des Verstärkers 3 verursacht. Deshalb werden die gemessenen Pegel gespeichert, miteinander verglichen und aus der Abweichung des Pegels des demodulierten Signals $S_{II}$ von dem Pegel des demodulierten Signals $S_{III}$ wird ein Regelsignal für den Verstärker 3 abgeleitet, das diesen Verstärker so regelt, dass Pegelgleichheit eintritt. Das von dem Rechner abgegebene digitale Regelsignal wird von einem Digital/Analog-Wandler 8 in ein analoges Regelsignal umgewandelt, das dem Verstärker 3 zugeführt wird.

Ist die Dämpfung im Dämpfungsglied 1 nicht gleich der Verstärkung im Verstärker 3, dann müssen die Pegel der demodulierten Signale $S_{II}$ und $S_{III}$ in einem festen Verhältnis zueinander stehen. Das Regelsignal wird in diesem Fall von der Abweichung des Verhältnisses vom Sollwert abgeleitet.

Anstatt den Verstärker zu regeln, ist es auch möglich, die Abweichung von der Sollverstärkung bei der Auswertung des zu überwachenden Signals im Rechner 7 rechnerisch zu berücksichtigen.

Die Steuerung der Schalteinrichtungen 2, 5 und des Analog/Digital-Wandlers 6 erfolgt durch eine Steuereinrichtung 9, die ihre Steuerbefehle vom Rechner 7 erhält.

Da alle Steuerungen vom Rechner 7 ausgehen, ist es möglich, die Auswertung so durchzuführen, dass während Einschwingzeiten einige Abtastwerte des Analog/Digital-Wandlers nicht berücksichtigt werden.

Diese Überwachungseinrichtung lässt sich besonders vorteilhaft bei der Überwachung des bekannten Instrumentenlandesystems ILS einsetzen. Dort werden das von einem Nahfeld-Überwachungsdipol, das von einem Integralnetzwerk und das direkt vom Sender ausgekoppelte Signal überwacht. Das vom Sender ausgekoppelte Signal ist wesentlich grösser als die beiden anderen Signale und kann bei der Anordnung gemäss der einzigen Zeichnung in vorteilhafter Weise als das Signal $S_{III}$ verwendet werden.

Die Schalteinrichtung wird, wenn mehrere Signale überwacht werden, entsprechend erweitert. Der Rechner steuert, wie bereits erwähnt, die Schalteinrichtung und bestimmt somit, welches Signal gerade überwacht werden soll. Die Überwachung erfolgt im Zeitmultiplex. Es ist weiterhin möglich, die Verstärkung des Verstärkers 3 für die einzelnen zu überwachenden Signale unterschiedlich einzustellen. Es reicht aus, das Signal $S_{II}$ in Abständen von 0,01 sec durch den Verstärker zu leiten, da sich die Parameter des Verstärkers nur langsam ändern.

Bei der Verwendung der Überwachungseinrichtung bei dem ILS ist von Vorteil, dem Analog/Digital-Wandler einen Tiefpass vorzuschalten, um unerwünschte Frequenzanteile (z.B. Sprachsignale oberhalb der Abtastfrequenz des Analog/Digital-Wandlers von 960 Hz) auszufiltern. Die Analyse und Auswertung der zu überwachenden Signale erfolgt in besonders vorteilhafter Weise im Rechner mittels einer Fourierzerlegung.

Der Rechner gibt das Überwachungsergebnis ab. Beim Vorhandensein von Störungen ist es möglich, die Anlage abzuschalten oder, falls vorhanden, auf eine Reserveanlage umzuschalten.

**Patentansprüche**

1. Einrichtung zur Überwachung des Pegels eines Hochfrequenzsignals, insbesondere zur Überwachung der von Navigationsanlagen abgestrahlten Signale, mit einem Verstärker (3) für das zu überwachende Hochfrequenzsignal und einer Auswerteschaltung (7), dadurch gekennzeichnet, dass dem Verstärker (3) eine Schalteinrichtung (2) vorgeschaltet ist, über die dem Verstärker je nach Schaltstellung das zu überwachende Hochfrequenzsignal ($S_I$) oder ein Referenz-Hochfrequenzsignal ($S_{II}$) zugeführt ist, dass ein Dämpfungsglied (1) vorgesehen ist, mittels dessen das Referenzhochfrequenzsignal durch Dämpfung eines weiteren Hochfrequenzsignals ($S_{III}$), dessen Pegel wesentlich grösser als derjenige des zu überwachenden Signals ist, abgeleitet wird, dass die verstärkten Signale auf einem ersten Weg (3, 4, 5, 6) und das weitere Hochfrequenzsignal auf einem zweiten Weg (10, 5, 6) der Auswerteschaltung (7) zugeführt sind, dass die Auswerteschaltung Einrichtungen zur Ermittlung und zum Vergleich der Pegel des verstärkten Referenz-Hochfrequenzsignals und des weiteren Hochfrequenzsignals aufweist, und dass entweder Mittel zur Regelung der Verstärkung des Verstärkers (3) in Abhängigkeit von der Abweichung des Verhältnisses der verglichenen Pegel von einem Sollwert oder Mittel zur Berücksichtigung einer solchen Abweichung bei der Auswertung des überwachten Pegels aufweist.

2. Einrichtung nach Anspruch 1, dadurch gekennzeichnet, dass in dem ersten und in dem zweiten Weg Demodulatoren (4, 10) vorgesehen sind, dass zum Digitalisieren der Ausgangssignale der Demodulatoren ein A/D-Wandler (6) vorgesehen ist und dass die Auswerteschaltung (7) ein Rechner ist.

3. Einrichtung nach Anspruch 2, dadurch gekennzeichnet, dass eine weitere Schalteinrichtung (5) vorgesehen ist, die das Signal des einen oder des anderen Demodulators (4, 10) zu dem Analog/Digital-Wandler (6) weiterleitet und dass die jeweils ermittelten Pegel-Werte zum Vergleich gespeichert werden.

4. Einrichtung nach Anspruch 3, dadurch gekennzeichnet, dass die beiden Schalteinrichtungen (2, 5) und der Analog/Digital-Wandler über den Rechner (7) gesteuert werden.

5. Einrichtung nach Anspruch 3 oder 4, dadurch gekennzeichnet, dass die Auswerteschaltung (7) Mittel zur Verarbeitung der Fourierkomponenten des überwachten Hochfrequenzsignals aufweist.

## Claims

1. Facility for monitoring the level of a radio-frequency signal, particularly for monitoring the signals radiated by navigation systems, with an amplifier (3) for the radio-frequency signal to be monitored and an evaluating device (7), characterized in that the amplifier (3) is preceded by a switching device (2) via which, depending on the switch position, either the radio-frequency signal to be monitored ($S_I$) or a reference radio-frequency signal ($S_{II}$) is passed to the amplifier, that an attenuator (1) is provided by means of which the reference radio-frequency signal is derived by attenuation of a further radio-frequency signal ($S_{III}$) whose level is considerably higher than that of the signal to be monitored, that the amplified signals are passed to the evaluating device (7) by a first path (3, 4, 5, 6) and the further radio-frequency signal by a second path (10, 5, 6), that the evaluating device contains devices for determining and comparing the levels of the amplified reference radio-frequency signal and the further radio-frequency signal, and that it includes either means of regulating the gain of the amplifier (3) depending on the deviation of the relationship between the compared levels from a desired value or means for taking into account such a deviation in the evaluation of the level monitored.

2. A facility as claimed in Claim 1, characterized in that demodulators (4, 10) are provided in the first and the second path, that an A/D converter (6) is provided for digitalizing the output signals of the demodulators and that the evaluating device (7) is a computer.

3. A facility as claimed in Claim 2, characterized in that an additional switching device (5) is provided which passes the signal from the one or the other demodulator (4, 10) to the analog/digital converter (6) and that the level values determined in each case are stored for comparison.

4. A facility as claimed in Claim 3, characterized in that the two switching devices (2, 5) and the analog/digital converter are controlled via the computer (7).

5. A facility as claimed in Claim 3 or 4, characterized in that the evaluating device (7) contains means for processing the Fourier components of the monitored radio-frequency signal.

## Revendications

1. Equipement de surveillance du niveau d'un signal à haute fréquence, en particulier pour la surveillance de signaux rayonnés par un système de navigation, comprenant un amplificateur (3) pour le signal à haute fréquence à surveiller et un dispositif d'évaluation (7), caractérisé en ce qu'un dispositif de commutation (2) est connecté en amont de l'amplificateur (3), par lequel l'amplificateur reçoit, selon sa position de commutation, le signal à haute fréquence à surveiller (SI) ou un signal à haute fréquence de référence (SII), en ce qu'un atténuateur (1) est prévu, fournissant le signal de référence à haute fréquence, par atténuation d'un signal additionnel à haute fréquence (SIII), dont le niveau est considérablement plus élevé que celui du signal à haute fréquence à surveiller, en ce que les signaux amplifiés sont fournis au dispositif d'évaluation (7) par un premier trajet (3, 4, 5, 6) et le signal additionnel à haute fréquence lui est fourni par un deuxième trajet (10, 5, 6), en ce que le dispositif d'évaluation comprend des circuits de détermination et de comparaison de niveaux du signal à haute fréquence de référence et du signal additionnel à haute fréquence et en ce que, soit par ajustement du taux d'amplification de l'amplificateur (3) en fonction de la déviation de la différence entre les niveaux comparés par rapport à une valeur de consigne, ou par prise en considération d'une telle déviation, l'évaluation des niveaux surveillés est réalisée.

2. Equipement selon la revendication 1, caractérisé en ce que des démodulateurs (4, 10) sont inclus dans les premier et deuxième trajets, en ce qu'un convertisseur analogique-numérique (6) est prévu pour rendre numériques les signaux de sortie des démodulateurs et en ce que le circuit d'évaluation (7) est un calculateur.

3. Equipement selon la revendication 2, caractérisé en ce qu'il est prévu un commutateur additionnel (5) qui achemine au convertisseur analogique-numérique (6) le signal de l'un ou de l'autre démodulateur (4, 10) et en ce que les valeurs de niveau déterminés sont enregistrées en vue d'une comparaison.

4. Equipement selon la revendication 3, caractérisé en ce que les deux circuits de commutation (2, 5) et le convertisseur analogique-numérique sont commandés par le calculateur (7).

5. Equipement selon la revendication 3 ou 4, caractérisé en ce que le dispositif d'évaluation (7) opère un traitement des composantes de Fourier du signal à haute fréquence surveillé.